# EUROPEAN PATENT APPLICATION

(11) **EP 4 567 673 A1**
(43) Date of publication of application: **11.06.2025**
(21) Application number: 24213265.2
(22) Date of filing: 15.11.2024
(51) Int. Cl.: G06N 3/049, G06N 3/063

(54) **NEURON MODULE LEARNING DEVICE AND METHOD OF OPERATING THE SAME**

(30) Priority: 04.12.2023 KR 20230173550
(71) Applicant: Samsung Electronics Co., Ltd., Suwon-si, Gyeonggi-do 16677 (KR); Research & Business Foundation Sungkyunkwan University, Gyeonggi-do 16419 (KR)
(72) Inventor: Lee, Yoonmyung, Suwon-si, Gyeonggi-do 16419 (KR); Park, Donghyun, Suwon-si, Gyeonggi-do 16419 (KR); Mun, Hajung, Suwon-si, Gyeonggi-do 16419 (KR); Im, Hyeonseong, Suwon-si, Gyeonggi-do 16419 (KR); Chun, Jung-Hoon, Suwon-si, Gyeonggi-do 16419 (KR)
(74) Representative: Grünecker Patent- und Rechtsanwälte PartG mbB

(57) **Abstract**

A learning device of a neuron module includes a timer configured to be reset and restarted, based on a post-spike occurring in the neuron module in a spiking neural network (SNN), and a processor configured to determine a post-then-pre time based on time information of the timer based on a pre-spike being received by at least one synapse of a plurality of synapses of the neuron module, determine a weight variation based on the post-then-pre time, and update a weight of the at least one synapse receiving the pre-spike, based on the weight variation.

## Description

### BACKGROUND

### 1. Field

The present disclosure relates generally to machine learning, and more particularly, to a neuron module learning device and a method of operating the neuron module learning device.

### 2. Description of Related Art

Neuromorphic hardware, which may mimic operating principles of a human brain in which numerous neurons may transmit electrical/chemical signals to process and/or store information and/or perform cognition/recognition/perception-related activities in parallel, may perform recollection and computation of numerous data in parallel. Related von Neumann-type hardware, which may sequentially process data when it is input, may have desirable performance in simple numerical calculations and execution of precisely written programs. However, such related hardware may be relatively less efficient in performing processes related to pattern recognition, real-time recognition, and/or voice recognition. For example, such processes may need analysis, understanding, and/or processing of images and/or sounds to be performed in a similar manner to humans performing similar tasks. That is, the ability of the related devices to perform these human-like tasks may be constrained by structural limitations that may include, but not be limited to, bandwidth and the like.

### SUMMARY

One or more example embodiments may address at least some of the problems and/or disadvantages described above and/or other disadvantages not described above. In addition, the example embodiments may not be required to overcome the disadvantages described above, and an example embodiment may not overcome any of the problems described above.

The invention is what is claimed in the independent claims. Preferred embodiments are specified in the dependent claims.

According to an aspect of the present disclosure, a learning device of a neuron module, which includes one or more neurons, includes a timer configured to be reset and restarted, based on a post-spike occurring in the neuron module in a spiking neural network (SNN), and a processor configured to determine a post-then-pre time based on time information of the timer based on a pre-spike being received by at least one synapse of a plurality of synapses of the neuron module, determine a weight variation based on the post-then-pre time, and update a weight of the at least one synapse receiving the pre-spike, based on the weight variation.

In some embodiments, the timer may be further configured to count a time without reset that includes occurrence of the pre-spike being received by the at least one synapse of the plurality of synapses.

In some embodiments, the processor is may be further configured to determine the post-then-pre time, based on the pre-spike, each occurrence of the pre-spike being received by the at least one synapse of the plurality of synapses.

In some embodiments, the processor is may be further configured to, based on the pre-spike received by the at least one synapse of the plurality of synapses being received after a preset threshold time, prevent a determination of the post-then-pre time corresponding to the pre-spike.

In some embodiments, the processor is may be further configured to determine a pre-then-post time based on a difference between first time information of the timer based on the post-spike occurring and second time information of the timer based on the pre-spike being received before the post-spike occurs, and determine the weight variation based on the pre-then-post time.

In some embodiments, the learning device may further include a subtractor configured to calculate the difference between the first time information and the second time information.

In some embodiments, the processor is may be further configured to, based on the pre-spike received before the post-spike occurs being received before a preset threshold time, prevent a determination of the pre-then-post time corresponding to the pre-spike.

In some embodiments, the processor is may be further configured to, based on a first difference between a first occurrence time of a previous post-spike occurring before the post-spike and a second occurrence time of the post-spike being greater than a threshold time, for a pre-spike of which a second difference between the second occurrence time and a reception time of the post-spike is less than the threshold time, determine a pre-then-post time based on first time information of the timer based on the post-spike occurring, second time information of the timer based on the pre-spike being received before the post-spike occurs, and the threshold time, and determine the weight variation based on the pre-then-post time.

In some embodiments, the learning device may further include an operation clock, having a first frequency, applied to the processor, a spike clock, having a second frequency, applied to the timer. The first frequency may be higher than the second frequency.

In some embodiments, the learning device may further include a pre-spike buffer including bits representing whether the pre-spike is received at a corresponding synapse of the plurality of synapses. The bits may be grouped into a plurality of bit groups. The processor may be further configured to perform a search operation of searching for a synapse of the plurality of synapses at which the pre-spike is received by selectively performing the search operation on a bit group of the plurality of bit groups having a first value obtained as a result of a bitwise OR operation performed on the plurality of bit groups.

In some embodiments, the learning device may further include a post-spike time buffer configured to store an occurrence time of the post-spike, and a register array configured to, based on the pre-spike being received in the neuron module, store identification information of a synapse receiving the pre-spike, the time information of the timer based on the pre-spike being received, and characteristic information about the pre-spike.

In some embodiments, the register array may be further configured to have a size equivalent to a number of pre-spikes for which a pre-then-post time is to be tracked.

In some embodiments, the processor is may be further configured to determine that the post-spike occurs based on at least one of an accumulated value of pre-spikes received by the neuron module through the plurality of synapses exceeding a threshold or based on a signal forcing the accumulated value of pre-spikes to exceed the threshold being applied to the neuron module from outside the learning device.

According to an aspect of the present disclosure, a method of operating a learning device of a neuron module, which includes one or more neurons, includes determining a post-then-pre time based on time information of a timer obtained based on a pre-spike being received by at least one synapse of a plurality of synapses of the neuron module in an SNN, and updating a weight of the at least one synapse receiving the pre-spike based on a weight variation determined based on the post-then-pre time. The method further includes resetting and restarting the timer based on a post-spike occurring in the neuron module.

In some embodiments, the method may further include counting a time without reset that includes occurrence of the pre-spike being received by the at least one synapse of the plurality of synapses.

In some embodiments, the determining of the post-then-pre time may include determining the post-then-pre time, based on the pre-spike, each occurrence of the pre-spike being received by the at least one synapse of the plurality of synapses.

In some embodiments, the determining of the post-then-pre time may include, based on the pre-spike received by the at least one synapse of the plurality of synapses being received after a preset threshold time, preventing the determining of the post-then-pre time corresponding to the pre-spike.

In some embodiments, the method may further include determining a pre-then-post time based on a difference between first time information of the timer based on the post-spike occurring in the neuron module and second time information of the timer based on the pre-spike being received before the post-spike occurs. The updating of the weight may include updating the weight of the at least one synapse based on the weight variation determined based on the pre-then-post time.

In some embodiments, the determining of the pre-then-post time may include, based on the pre-spike received before the post-spike occurs being received before a preset threshold time, preventing the determining of the pre-then-post time corresponding to the pre-spike.

According to an aspect of the present disclosure, a non-transitory computer-readable storage medium storing computer-executable instructions for operating a learning device of a neuron module, which includes one or more neurons, that, when executed by a processor of the learning device, cause the neuron module to determine a post-then-pre time based on time information of a timer obtained based on a pre-spike being received by at least one synapse of a plurality of synapses of the neuron module in an SNN, and update a weight of the at least one synapse receiving the pre-spike based on a weight variation determined based on the post-then-pre time. The computer-executable instructions further cause the learning device to reset and restart the timer based on a post-spike occurring in the neuron module.

Additional aspects may be set forth in part in the description which follows and, in part, may be apparent from the description, and/or may be learned by practice of the presented embodiments.

### BRIEF DESCRIPTION OF THE DRAWINGS

The above and/or other aspects, features, and advantages of certain embodiments of the present disclosure may be more apparent from the following description taken in conjunction with the accompanying drawings, in which:
FIG. 1 is a diagram illustrating the operations of a neuron module of a spiking neural network (SNN), according to an example embodiment;
FIGS. 2 and 3 are diagrams illustrating a spike-timing-dependent plasticity (STDP) learning process, according to an example embodiment;
FIG. 4 is a diagram illustrating the operations of a single timer, according to an example embodiment;
FIG. 5 is a diagram illustrating an operation of measuring a post-then-pre time, according to an example embodiment;
FIG. 6 is a diagram illustrating an operation of measuring a pre-then-post time, according to an example embodiment;
FIGS. 7 to 9 are diagrams illustrating a tracking window, according to an example embodiment;
FIG. 10 is a diagram illustrating a spike clock and an operation clock, according to an example embodiment;
FIG. 11 is a diagram illustrating the operations performed within one spike clock, according to an example embodiment;
FIG. 12 is a diagram illustrating a pre-spike buffer, according to an example embodiment;
FIG. 13 is a block diagram illustrating an operation performed when a pre-spike is received, according to an example embodiment;
FIG. 14 is a block diagram illustrating an operation performed when a post-spike occurs, according to an example embodiment;
FIG. 15 is a block diagram illustrating an operation performed when a second tracking window limit is reached, according to an example embodiment;
FIG. 16 is a diagram illustrating an operation in which a tracking queue is updated when a pre-spike is received and a post-spike occurs, according to an example embodiment;
FIG. 17 is a diagram illustrating an operation in which a tracking queue is updated when a second tracking window limit is reached, according to an example embodiment;
FIG. 18 is a flowchart illustrating an STDP learning operation, according to an example embodiment;
FIG. 19 is a flowchart illustrating a method of operating a learning device of a neuron module, according to an example embodiment; and
FIG. 20 is a diagram illustrating a learning device of a neuron module, according to an example embodiment.

### DETAILED DESCRIPTION

The following structural or functional descriptions of example embodiments are provided to merely describe the example embodiments, and the scope of the example embodiments is not limited to the descriptions provided in the disclosure. Various changes and modifications can be made thereto by those of ordinary skill in the art.

As used herein, "A or B," "at least one of A and B," "at least one of A or B," "A, B, or C," "at least one of A, B, and C," and "A, B, or C," each of which may include any one of the items listed together in the corresponding one of the phrases, or all possible combinations thereof. Although terms of "first," "second," and the like are used to explain various components, the components are not limited to such terms. These terms are used only to distinguish one component from another component. For example, a first component may be referred to as a second component, or similarly, the second component may be referred to as the first component within the scope of the present disclosure.

It is to be understood that when a component is referred to as being "connected to" another component, the component can be directly connected or coupled to the other component or intervening components may be present.

As used herein, the singular forms are intended to include the plural forms as well, unless the context clearly indicates otherwise. It should be further understood that the terms "comprises," "comprising," "includes," and/or "including," when used in this specification, specify the presence of stated features, integers, steps, operations, elements, components or a combination thereof, but do not preclude the presence or addition of one or more other features, integers, steps, operations, elements, components, and/or groups thereof.

Unless otherwise defined herein, all terms used herein including technical or scientific terms have the same meanings as those generally understood by one of ordinary skill in the art. Terms defined in dictionaries generally used should be construed to have meanings matching with contextual meanings in the related art and are not to be construed as an ideal or excessively formal meaning unless otherwise defined herein.

Reference throughout the present disclosure to "one embodiment," "an embodiment," "an example embodiment," or similar language may indicate that a particular feature, structure, or characteristic described in connection with the indicated embodiment is included in at least one embodiment of the present solution. Thus, the phrases "in one embodiment", "in an embodiment," "in an example embodiment," and similar language throughout this disclosure may, but do not necessarily, all refer to the same embodiment. The embodiments described herein are example embodiments, and thus, the disclosure is not limited thereto and may be realized in various other forms.

It is to be understood that the specific order or hierarchy of blocks in the processes/flowcharts disclosed are an illustration of exemplary approaches. Based upon design preferences, it is understood that the specific order or hierarchy of blocks in the processes/flowcharts may be rearranged. Further, some blocks may be combined or omitted. The accompanying claims present elements of the various blocks in a sample order, and are not meant to be limited to the specific order or hierarchy presented.

The embodiments herein may be described and illustrated in terms of blocks, as shown in the drawings, which carry out a described function or functions. These blocks, which may be referred to herein as units or modules or the like, or by names such as device, logic, circuit, controller, counter, comparator, generator, converter, or the like, may be physically implemented by analog and/or digital circuits including one or more of a logic gate, an integrated circuit, a microprocessor, a microcontroller, a memory circuit, a passive electronic component, an active electronic component, an optical component, and the like.

In the present disclosure, the articles "a" and "an" are intended to include one or more items, and may be used interchangeably with "one or more." Where only one item is intended, the term "one" or similar language is used. For example, the term "a processor" may refer to either a single processor or multiple processors. When a processor is described as carrying out an operation and the processor is referred to perform an additional operation, the multiple operations may be executed by either a single processor or any one or a combination of multiple processors.

Hereinafter, example embodiments are described with reference to the accompanying drawings. When describing the example embodiments with reference to the accompanying drawings, like reference numerals refer to like components and a repeated description related thereto may be omitted.

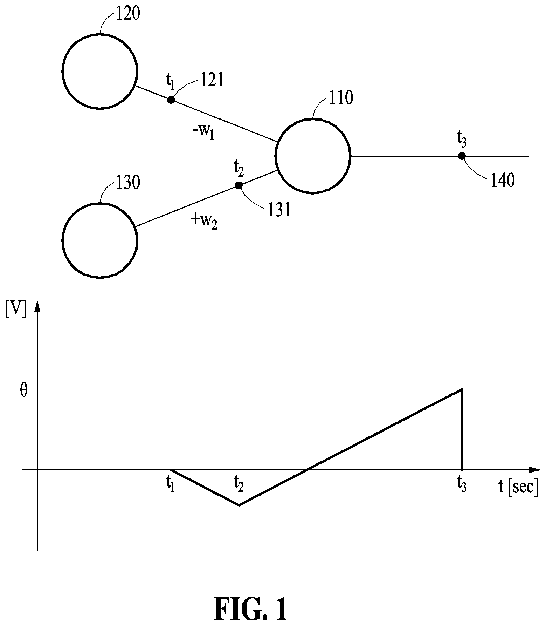

FIG. 1 is a diagram illustrating the operations of a neuron module of a spiking neural network (SNN), according to an example embodiment. The neuron module may include one or more neurons.

An SNN may refer to a model that may mimic a biological neural network. For example, an SNN may mimic a mechanism of real neurons to use a realistic neuron model. The SNN may configure an artificial neural network (ANN) in which signals may be exchanged in the form of a spike (e.g., 1-bit data). In a similar manner to operating principles of an actual biological neural network, the influence of spikes may vary according to a weight set for each synapse. The weight of a synapse may be updated based on a time between spikes. For example, the weight of the synapses may be updated using at least one of various methods, of which spike-timing-dependent plasticity (STDP), including long-term potentiation (LTP) and long-term depression (LTD), may be the most representative example of a synaptic weight learning rule.

The STDP may refer to a learning technique that may adjust the strength of synaptic connections between neurons. For example, the connection strengths may be adjusted based on a relative timing (e.g., action potential) of output and input spikes of a specific neuron. Under the STDP process, the LTP may occur when an input spike to a neuron is about to occur, on average, immediately before an output spike of the neuron occurs, and then such a specific input may become stronger. Alternatively or additionally, the LTD may occur when an input spike is about to occur, on average, immediately after an output spike occurs, and then such a specific input may become weaker. That is, the STDP process may be and/or may include a learning method based on the LTP and the LTD. As a result, inputs that may cause excitation of a neuron receiving an input spike may become more likely to be contributable in the future, whereas inputs that do not cause an output spike may become less likely to be contributable in the future. Since an input spike may be transmitted to a subsequent neuron. In an embodiment, a neuron generating the input spike may be referred to as a pre-synaptic neuron, and the neuron receiving the input spike may be referred to as a post-synaptic neuron.

The STDP learning rule may be a function of a time difference between a spike time (e.g., t_{PRE} or tᵢₙ) of a pre-synaptic neuron and a spike time (e.g., t_{POST} or tₒᵤₜ) of the post-synaptic neuron (e.g., t = T_{POST} - t_{PRE}), and may be effectively adapted to a synaptic weight of a synapse that may connect the pre-synaptic neuron to the post-synaptic neuron. A representative STDP curve graph may show that, if the time difference is positive (e.g., when the pre-synaptic neuron fires before the post-synaptic neuron), it increases the synaptic weight (e.g., potentiating the synapse), and conversely, if the time difference is negative (e.g., when the post-synaptic neuron fires before the pre-synaptic neuron), it decreases the synaptic weight (e.g., depressing the synapse).

In the STDP process, a change in the synaptic weight over time may generally be performed based on exponential decay.

Referring to FIG. 1, an SNN may include neurons (e.g., first neuron 110, second neuron 120, and third neuron 130) connected through synapses. As shown in FIG. 1, the first neuron 110 is illustrated as being included in a current layer, and the second neuron 120 and the third neuron 130 are illustrated as being included in a previous layer, for the convenience of description. However, more neurons may be included in various layers, and they may be connected through synapses to form the SNN. In addition, some of the neurons may be connected to other neurons on the same layer through lateral connections, and some of the neurons may be connected back to neurons in the previous layer through feedback connections.

As shown in FIG. 1, a membrane potential V of the first neuron 110 may change as shown in the graph of FIG. 1 by a spike of the second neuron 120 that fires at a time t₁ 121 and a spike of the third neuron 130 that fires at a time t₂ 131.

Referring to the graph, based on the spike of the second neuron 120 fired at the time t₁ 121 and a weight -w₁ of a connection synapse between the first neuron 110 and the second neuron 120, the membrane potential V of the first neuron 110 may decrease. In addition, based on the spike of the third neuron 130 being fired at the time t₂ 131 and a weight +w₂ of a connection synapse between the first neuron 110 and the third neuron 130, the membrane potential of the first neuron 110 may increase. At a time t₃ 140, when the membrane potential V of the first neuron 110 reaches a membrane potential threshold θ, the first neuron 110 may fire to generate a spike, and the membrane potential of the first neuron 110 may become zero (0). That is, the first neuron 110 may accumulate one or more spikes received from the second neuron 120 and the third neuron 130 connected through the synapses, and may output the spike when the accumulated membrane potential reaches the membrane potential threshold θ. Accordingly, the first neuron 110 may fire only one spike at a maximum membrane potential during an inference process for one input.

For the convenience of description, based on the first neuron 110, a spike input to the first neuron 110 through the synapse may be referred to as a pre-spike, and a spike output by firing from the first neuron 110 may be referred to as a post-spike. In addition, a neuron may also be referred to as a neuron module. A device configured to perform the learning method proposed herein may be referred to as a learning device of a neuron module.

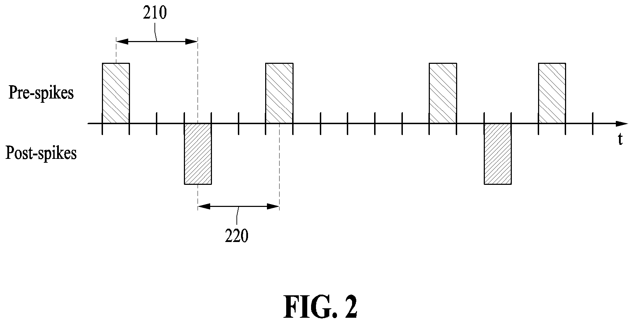

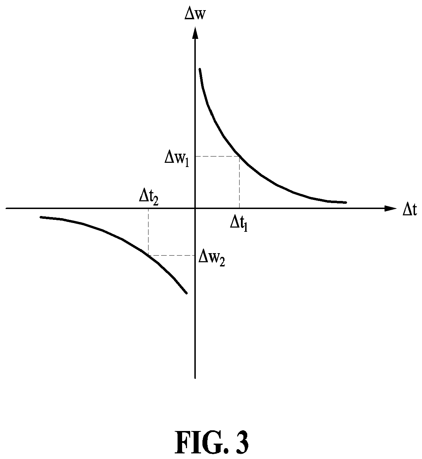

FIGS. 2 and 3 are diagrams illustrating an STDP learning process, according to an example embodiment.

The STDP learning process proposed herein may be implemented in the form of unsupervised on-chip learning and may be applied as an ANN learning method to a neuromorphic processor with an SNN. In addition, a system that reproduces the behavior of a biological neural network by simulating the biological neural network may provide a similar STDP function to a learning principle of the real biological neural network.

Referring to FIG. 2, illustrated is an example provided to describe a pre-then-post time 210 and a post-then-pre time 220 used in the STDP learning process. In FIG. 2, bars at the upper end may represent pre-spikes, and bars at the lower end may represent post-spikes. The pre-then-post time 210 may be a time difference obtained by subtracting a reception time of a pre-spike from an occurrence time of a post-spike when the post-spike occurs in a neuron module after the pre-spike is received in the neuron module and may have a positive value. The post-then-pre time 220 may be a time difference obtained by subtracting a reception time of a pre-spike from an occurrence time of a post-spike when the pre-spike is received in a neuron module after the post-spike occurs in the neuron module and may have a negative value.

Referring to FIG. 3, illustrated is an example of an STDP curve used to determine a weight variation based on time differences that may be calculated as described with reference to FIG. 2. In the STDP curve, the x-axis may represent a time difference Δt (e.g., a time variation), and the y-axis may represent a weight variation Δw.

According to the STDP curve, since a time variation Δt₁ having a positive value, as the pre-then-post time 210 of FIG. 2, corresponds to a weight variation Δw₁ having a positive value, the positive weight variation Δw₁ may be determined based on the pre-then-post time 210. The weight variation Δw₁ may be added to a current weight of a synapse at which a pre-spike is received, thereby increasing the weight of the synapse. The weight increase may be referred to as synaptic LTP. According to the STDP curve of FIG. 2, as the pre-then-post time 210 is smaller, the weight variation Δw₁ may be determined to be larger, and conversely, as the pre-then-post time 210 is larger, the weight variation Δw₁ may be determined to be smaller. For example, when a post-spike occurs immediately after a pre-spike is received, this may indicate a high correlation between the pre-spike and the post-spike, and thus the weight of a synapse at which the pre-spike is received may be strengthened.

Since a time variation Δt₂ having a negative value, as the post-then-pre time 220 of FIG. 2, corresponds to a weight variation Δw₂ having a negative value, the negative weight variation Δw₂ may be determined based on the post-then-pre time 220. The weight variation Δw₂ may be added to a current weight of a synapse at which a pre-spike is received, thereby decreasing the weight of the synapse. According to the STDP curve of FIG. 2, firing in a reverse order in which a pre-spike is received after a post-spike occurs may decrease the weight of a synapse receiving the pre-spike, which may cause synaptic LTD.

The STDP curve shown in FIG. 3 is provided for the convenience of description, and various other STDP curves may also be used to determine a weight variation. For example, according to some embodiments, in some intervals, a positive time variation may correspond to a negative weight variation, or vice versa.

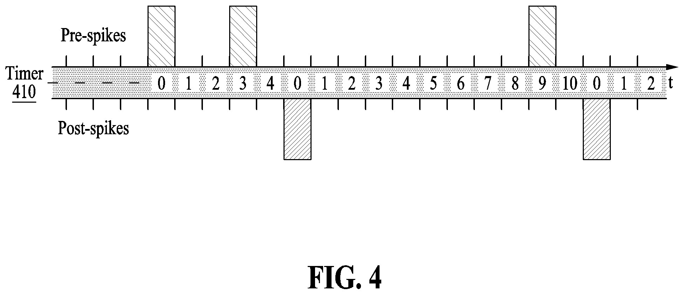

FIG. 4 is a diagram illustrating the operations of a single timer, according to an example embodiment.

Referring to FIG. 4, illustrated is an example provided to describe a timer 410 configured to operate depending on an occurrence of a post-spike. In FIG. 4, bars at the upper end may represent the receptions of pre-spikes, and bars at the lower end may represent the occurrences of post-spikes. In addition, numbers written on the timer 410 may indicate counter values of the timer 410 at corresponding times.

In an embodiment, a number of timers in a neuron module for measuring a time between spikes may be reduced to one (1) timer. Alternatively or additionally, the timer (e.g., timer 410) may be reset and/or restarted based on an occurrence of a post-spike rather than a reception of a pre-spike. Thereby, a neuron module, according to an embodiment, may be relatively more area-efficient (e.g., reduced size) when compared to a related neuron module, which may allow for an increased number of synapses for implementing the STDP learning.

FIG. 4 is a diagram illustrating the operations of a single timer used for STDP learning, according to an example embodiment. The timer 410 may also be referred to as a post-spike tracking timer, and when a post-spike occurs, the timer 410 may be reset and may then be immediately started to measure a post-then-pre time. According to an example embodiment, when there is no spike activity for a certain period of time, the timer 410 may be turned off and may then be restarted when a pre-spike is received and/or a post-spike occurs.

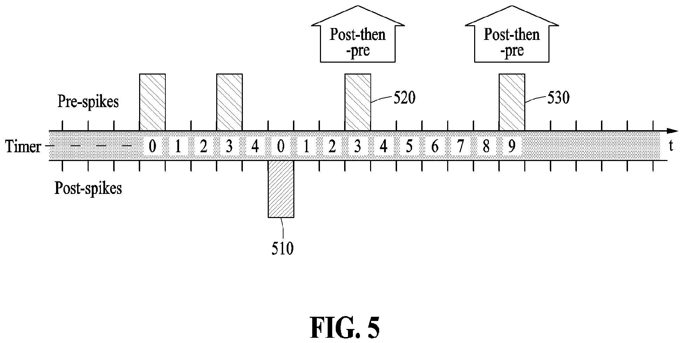

FIG. 5 is a diagram illustrating an operation of measuring a post-then-pre time, according to an example embodiment.

Referring to FIG. 5, when a post-spike 510 occurs, a timer (e.g., the timer 410) may be reset and restarted, and, when a pre-spike 520 is received, a post-then-pre time (e.g., - 3) may be determined based on time information of the timer 410 at a corresponding time. In addition, based on the determined post-then-pre time, a weight of a synapse receiving the pre-spike 520 may be updated. Similarly, when another pre-spike 530 is subsequently received, a post-then-pre time (e.g., -9) may be determined based on time information (e.g., 9) of the timer 410 at a corresponding time, and the weight of a synapse receiving the pre-spike 530 may be updated.

As the timer 410 is not reset even when a pre-spike is received but is reset and then restarted only when a post-spike occurs, a post-then-pre time may be determined based on time information of the timer 410 at a time at which the pre-spike is received, and a post-then-pre weight update may be performed immediately based on the post-then-pre time.

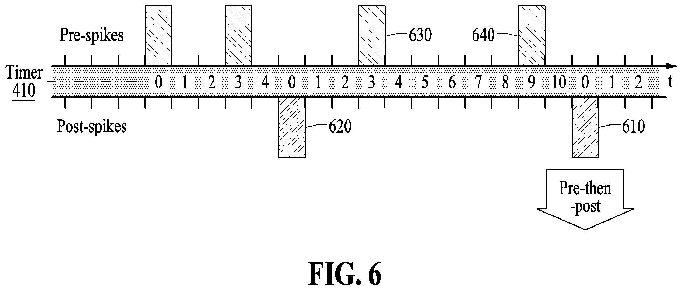

FIG. 6 is a diagram illustrating an operation of measuring a pre-then-post time, according to an example embodiment.

Referring to FIG. 6, when a post-spike 610 occurs, a pre-then-post weight update may be performed on pre-spikes (e.g., first pre-spike 630 and second pre-spike 640) that are received between a previous post-spike 620 that occurred previously and the current post-spike 610. Since the timer 410 may be reset when the post-spike 610 occurs, time information (e.g., 10) of the timer 410 immediately before the post-spike 610 may be used to calculate a post-then-pre time. A result (e.g., 7) of subtracting time information (e.g., 3) of the timer 410 at a reception time of the pre-spike 630 from time information (e.g., 10) of the timer 410 immediately before the post-spike 610 may be determined as a pre-then-post time, and the weight of a synapse receiving the first and second pre-spikes 630 and 640 may be updated. In such an embodiment, the weight of a synapse receiving the pre-spike 640 may also be updated in a similar manner.

According to an example embodiment, a post-spike may be generated in a neuron module, may be generated itself in a processor implementing the neuron module, and/or may be input from the outside. That is, the post-spike may be generated when an accumulated value of pre-spikes received by the neuron module through a plurality of synapses exceeds a threshold value and/or may be generated when a signal that forces the accumulated value of the pre-spikes to exceed the threshold value is applied to the neuron module from the outside of the learning device. For example, the signal applied to the neuron module from the outside of the learning device may represent a BIO_FIRE signal represented as one (1) bit.

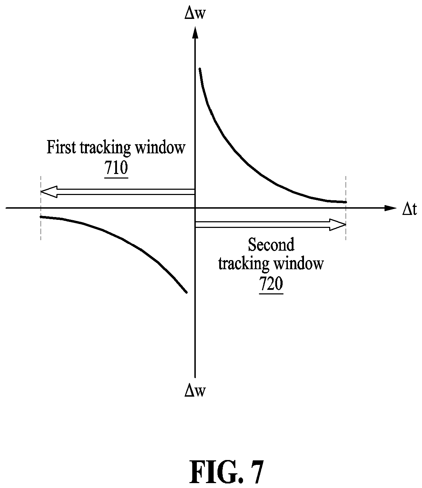

FIGS. 7 to 9 are diagrams illustrating a tracking window, according to an example embodiment.

Referring to FIG. 7, illustrated is an example of a tracking window applied to a STDP curve. For example, a weight update may be performed based on a pre-spike received between two adjacent post-spikes. However, due to a sparse nature of spikes, an interval between occurrence times of the two adjacent post-spikes may be relatively large. In such an example, a time interval from a pre-spike received immediately after a previous post-spike occurs to a current post-spike may be likely to be out of a significant range of a time variation Δt in the STDP curve. That is, when the time variation Δt is relatively large, a weight variation Δw determined accordingly may be determined to be relatively small. Thus, a loss incurred by an increase in computational amount may be greater than an increase in accuracy that may be obtained by applying the weight variation Δw. Similarly, for a pre-spike received at a time out of the significant range of the time variation Δt in the STDP curve after a post-spike occurs, a benefit that may be obtained by the weight update may not be computationally significant.

That is, the learning device may not need to perform the weight update on all pre-spikes received between two adjacent post-spikes. To that end, a first tracking window 710 applied to a post-then-pre time and a second tracking window 720 applied to a pre-then-post time may be used. A time variation out of the first tracking window 710 and the second tracking window 720 may effectively reduce a computational amount as an influence of a corresponding weight change is relatively small, and thus, may be ignored. For example, the respective sizes of the first tracking window 710 and the second tracking window 720 may be set to be the same and/or may be set differently. As another example, the sizes of the first tracking window 710 and the second tracking window 720 may be set to a maximum value that may be countable by the timer. However, the present disclosure is not limited in this regard, and examples thereof are not limited thereto.

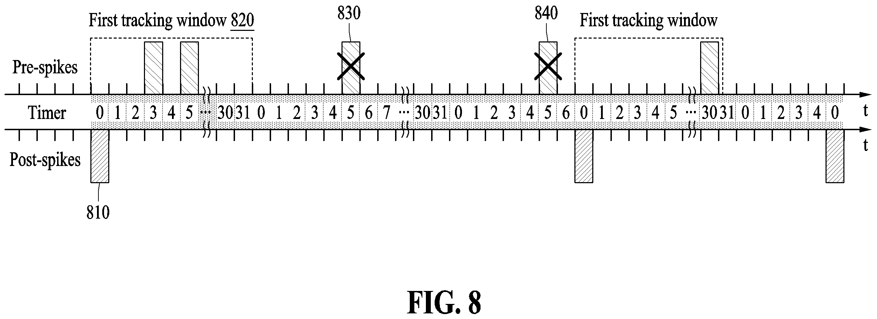

Referring to FIG. 8, illustrated is an example of a first tracking window 820 that may be set to 32, according to an example embodiment. The first tracking window 820 may be arranged based on a post-spike 810. A post-then-pre weight update may be performed on pre-spikes within the first tracking window 820 after the post-spike 810 occurs, but the post-then-pre weight update may be omitted for pre-spikes (e.g., first pre-spike 830 and second pre-spike 840) that are out of the first tracking window 820.

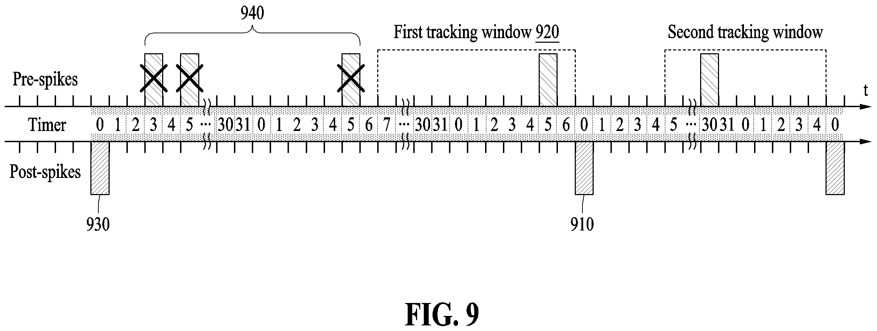

Referring to FIG. 9, illustrated is an example of a second tracking window 920 that may be set to 32, according to an embodiment. The second tracking window 920 may be arranged based on a post-spike 910. A pre-then-post weight update may be performed on pre-spikes within the second tracking window 920 before the post-spike 910 occurs, but the pre-then-post weight update may be omitted for pre-spikes 940 that are out of the second tracking window 920.

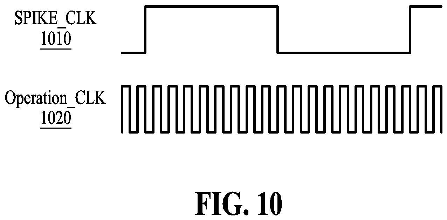

FIG. 10 is a diagram illustrating a spike clock and an operation clock, according to an example embodiment.

Referring to FIG. 10, illustrated are two clocks (e.g., spike clock 1010 and operation clock 1020) applied to a learning device of a neuron module. In an embodiment, a spike clock 1010 may be applied to a single timer (e.g., timer 410) in the learning device, and separately, an operation clock 1020 may be applied to a processor in the learning device, which may increase area efficiency and/or recycling of hardware resources of the learning device when compared to a related learning device. Since a frequency of the operation clock 1020 for operations (e.g., computations) may be set to be higher than a frequency of the spike clock 1010 for transmission and reception of spikes, operations (e.g., computations) that may be needed for input and/or output of spikes may occur over several cycles of the operation clock 1020.

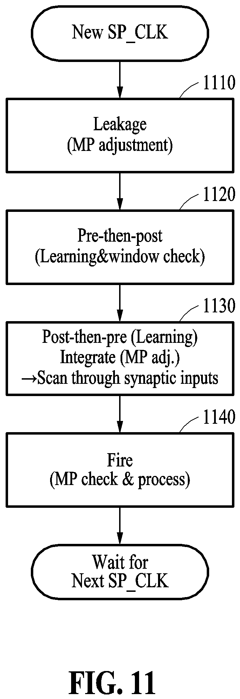

FIG. 11 is a diagram illustrating the operations performed within one spike clock, according to an example embodiment.

Referring to FIG. 11, illustrated is a series of operations occurring sequentially in one spike clock.

In operation 1110, leakage may be applied to a value of a membrane potential. As a result, the membrane potential may reach a resting potential over time without the input of a new pre-spike.

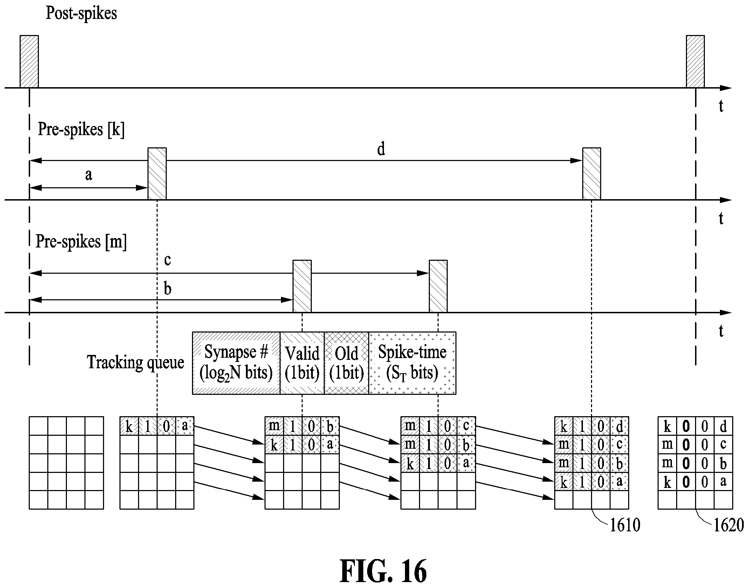

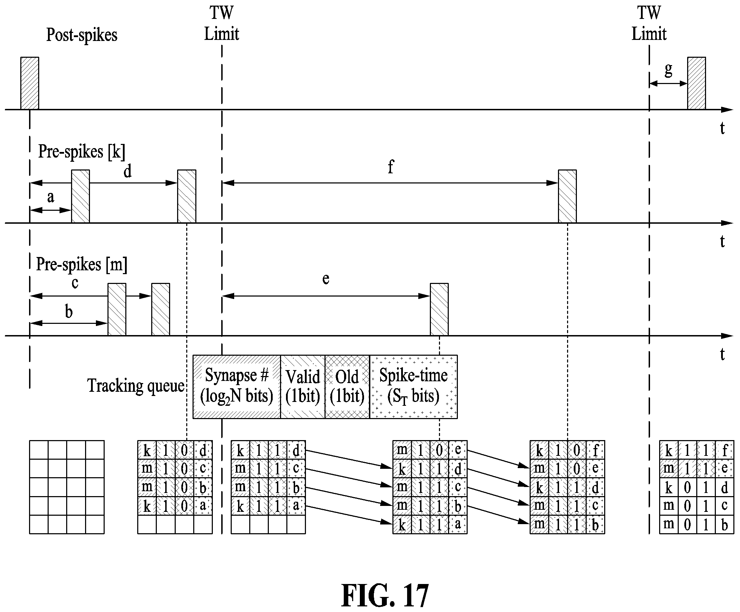

In operation 1120, LTP learning may be performed only when a post-spike fires. In such an example, a number of subtraction operations may be performed through time division as described with reference to FIGS. 2, 3, and 6. Each pre-then-post time may be converted into a weight variation Δw based on an STDP curve. For example, the conversion from a time variation Δt to the weight variation Δw may be performed by a lookup table following the STDP curve. However, the present disclosure is not limited thereto. The determined weight variation Δw may be added to a corresponding weight, and a synaptic weight update may thereby be performed. For one pre-spike, an operation of calculating a pre-then-post time, an operation of determining a weight variation Δw, and an operation of processing a subsequent pre-spike after a weight update is completed may be performed in sequential order. In operation 1120, an operation performed when a timer reaches a maximum value may be performed. For example, when a current timer value is verified to be at the maximum value, checking a tracking window may also be performed as valid and old bits may be updated. The valid and old bits are described with reference to FIGS. 16 and 17.

In operation 1130, LTD learning may be performed on synapses with pre-spikes by searching for all synapse directions one by one in a neuron module. Since the timer is reset and restarted when a post-spike fires, a counter value of the timer at the reception of a pre-spike may be used as a post-then-pre time. In a similar manner to LTP learning, in LTD learning, a weight variation Δw may be determined based on a time variation Δt through a lookup table related to an STDP curve of a post-then-pre time, and the weight variation Δw may be added to a weight of a corresponding synapse. When a synapse receiving a pre-spike is found while searching synapses one by one, a synapse search may be performed subsequent to performing an operation of calculating a post-then-pre time, an operation of determining a weight variation Δw, and an operation of updating a weight of a synapse.

In operation 1140, when the search for all synapse directions is completed, whether there is a fire (e.g., whether a post-spike fires or not) may be determined based on a value of the membrane potential.

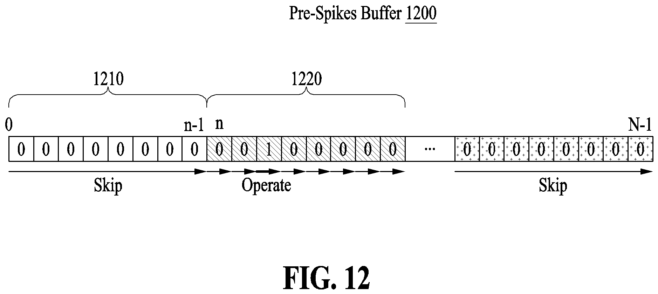

FIG. 12 is a diagram illustrating a pre-spike buffer, according to an example embodiment.

Referring to FIG. 12, a synapse search may be performed for operations required when receiving a pre-spike, such as, but not limited to, a synapse weight update and a tracking queue update based on a post-then-pre time, and the like. Since a clock domain may be separated, pre-spikes may be search effectively based on spike sparsity.

A pre-spike buffer 1200 may include bits indicating whether a pre-spike is received at a corresponding synapse. For example, in a case in which a neuron module includes N synapses (where N is a positive integer greater than zero (0)), the pre-spike buffer 1200 may include N bits, and each bit of the N bits may include a bit value indicating whether a pre-spike is received by a uniquely corresponding synapse. In the example of FIG. 12, each bit may include a value of zero (0) and/or "low" when a pre-spike is not received, and may include a value of one (1) and/or "high" when a pre-spike is received. However, examples are not limited thereto, and each bit may also include an opposite value depending on example embodiments.

For an effective search for a pre-spike, rather than checking all bits one by one, the bits may be grouped into a certain number (e.g., n, where n is a positive integer less than N) of groups and a bitwise operation (e.g., OR operation) may be performed on each group, and a search for a synapse receiving a pre-spike may be performed selectively on a group having a resulting value of 1. In the example of FIG. 12, since a result of the OR operation performed on a first group 1210 is zero (0), a search operation for a synapse may be skipped. In addition, since a result of the OR operation performed on a second group 1220 is one (1), the search operation for a synapse may be performed on second group 1220. As described above, the search operation may be skipped for groups without pre-spikes, and thus the number of cycles required for operations (and/or computations) may be effectively reduced when compared to related learning devices.

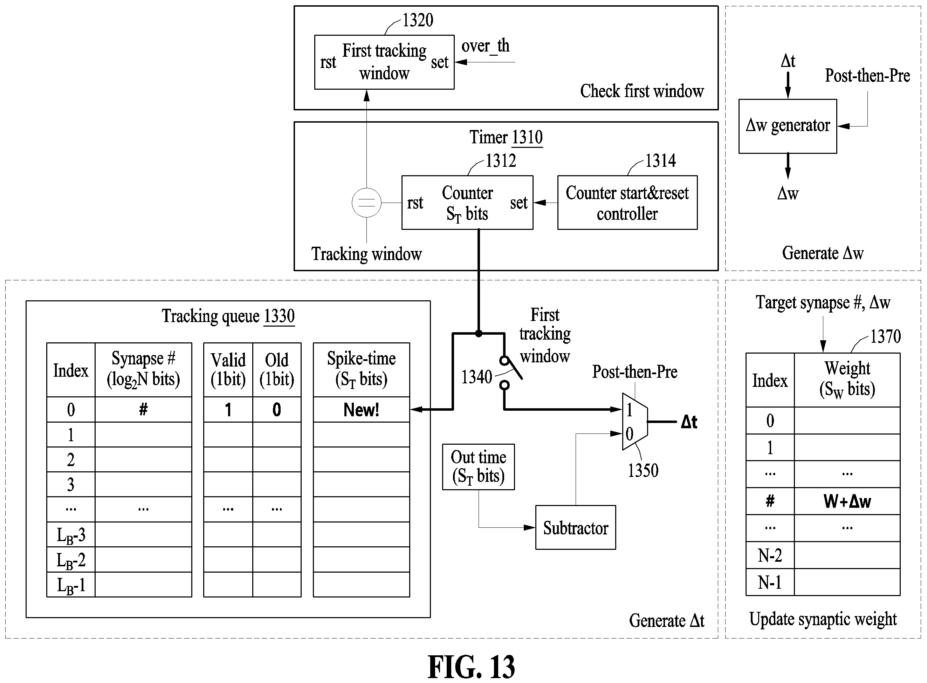

FIG. 13 is a block diagram illustrating an operation performed when a pre-spike is received, according to an example embodiment.

Referring to FIG. 13, an example block diagram shows elements for implementing STDP learning proposed herein. An area that operates in synchronization with the spike clock 1010 described above with reference to FIG. 10 may be indicated by a solid line, and an area that operates in synchronization with the operation clock 1020 described above with reference to FIG. 10 may be indicated by a dotted line. In the example of FIG. 13, N may represent the number of synapses of each neuron module, Sw may represent the bit size of a weight of a synapse, S_{T} may represent the bit size of a timer 1310, and L_{B} may represent the length of a tracking queue 1330, where N, S_{w}, S_{T}, and L_{B} are positive integers greater than zero (0).

The timer 1310 may include a counter 1312 of S_{T} bits and a counter start and reset controller 1314. The counter 1312 may operate according to a spike clock, and when a post-spike occurs, the counter 1312 may be reset and may then be immediately restarted. The counter start and reset controller 1314 may be and/or may include a block that resets the counter when a post-spike fires. However, the functions of the counter start and reset controller 1314 are not limited to the examples described above, and logic such as, but not limited to clock gating, may be added. A counter value may be used in at least three (3) situations. As a first example, the counter value when a pre-spike occurs may be used as a post-then-pre time and may be stored in the tracking queue 1330 for a later calculation of a pre-then-post time. As a second example, the counter value when a membrane potential value exceeds a threshold value may be stored in a post-spike time buffer and may then be used to calculate a pre-then-post time. As a third example, based on whether the counter value reaches a maximum value, the first tracking window 710 and the second tracking window 720 described above with reference to FIG. 7 may be managed. By performing the operations described above through one counter, post-then-pre learning may be performed regardless of the number of synapses.

The tracking queue 1330 may be and/or may include a register array in the form of a queue that stores corresponding information each time a pre-spike occurs for future pre-then-post weight updates. The tracking queue 1330 may store therein information about a direction of a synapse at which a pre-spike is received (e.g., identification information of the synapse) and a counter value at that time (e.g., time information of the timer), and may store [Valid, Old] = [1, 0]. A maximum number of pre-spikes that may be applied to the pre-then-post weight updates may be determined based on the length L_{B} (or size) of the tracking queue 1330. An example of such an operation of the tracking queue 1330 is shown in FIG. 13. Through one timer 1310 and the tracking queue 1330, the pre-then-post learning may also be performed with appropriate accuracy maintained, in addition to post-then-pre learning.

A first tracking window 1320 may be implemented as a 1-bit register, and may be set to one (1) and/or "high" to calculate a post-then-pre time for a pre-spike that is to occur later when a post-spike occurs and may be reset to zero (0) and/or "low" when the counter value of the timer 1310 reaches the maximum value. The first tracking window 1320 may be implemented by performing the post-then-pre weight update only when a value of the first tracking window 1320 is one (1) and/or "high" at the reception of a pre-spike.

The first tracking window 1320 may also be referred to herein as "is_in_LTD window" for the convenience of description.

A second tracking window may be implemented as a 2-bit register with a valid bit and an old bit, and the valid bit and the old bit may be included in the tracking queue 1330. The valid bit and the old bit are described with reference to FIGS. 16 and 17. The first tracking window 1320 and the second tracking window may be used to effectively reduce the hardware cost while maintaining an appropriate level of accuracy, when compared to a related learning device.

In an embodiment, a switch 1340 may be turned on and/or off based on the first tracking window 1320. When a time interval between two spikes does not exceed the first tracking window 1320, the switch 1340 may operate in an ON state, and a counter value may be transmitted to a multiplexer (MUX) 1350. Alternatively or additionally, when the time interval exceeds the first tracking window 1320, the switch 1340 may operate in an OFF state, and the counter value may not be transmitted to the MUX 1350.

The MUX 1350 may transmit, to an output end, a value received at one of two input ends based on whether the learning device is performing a post-then-pre weight update operation and/or a pre-then-post weight update operation. A value output from the MUX 1350 may be determined as a time variation Δt. In the case of the post-then-pre weight update operation, the MUX 1350 may transmit, to the output end, a counter value received at a second input end (e.g., second input end "1").

A weight variation generator 1360 may be and/or may include a block that determines a weight variation Δw corresponding to a time variation Δt between spikes. The weight variation generator 1360 may be configured as a lookup table. However, the present disclosure is not limited thereto.

The weight variation Δw may be added to a current weight W of a corresponding #-th synapse and stored in a weight register 1370.

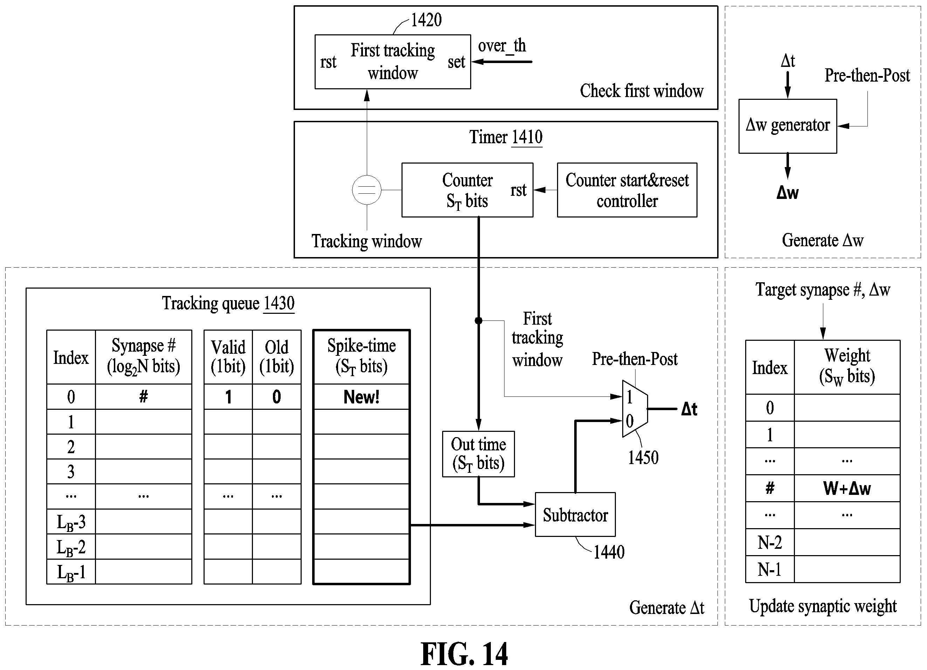

FIG. 14 is a block diagram illustrating an operation performed when a post-spike occurs, according to an example embodiment.

Referring to FIG. 14, when a post-spike occurs, a counter value of a timer 1410 may be transmitted to a subtractor 1440 as time information about a time when the post-spike occurs. In addition, time information about a time when a pre-spike occurs, which is stored in a spike-time column of a tracking queue 1430, may be transmitted to the subtractor 1440. The subtractor 1440 may calculate a difference between the two sets of input time information and transmit the difference value to a MUX 1450. The MUX 1450 may transmit a value received at a first input end (e.g., first input end "0") to an output end in response to a pre-then-post weight update operation. The architecture and operation of the block diagram depicted in FIG. 14 is similar in many respects to the architecture and operation of the block diagram in FIG.13, and may include additional features not mentioned above. Consequently, repeated descriptions of the block diagram depicted in FIG. 14 described above with reference to FIG. 13 may be omitted for the sake of brevity.

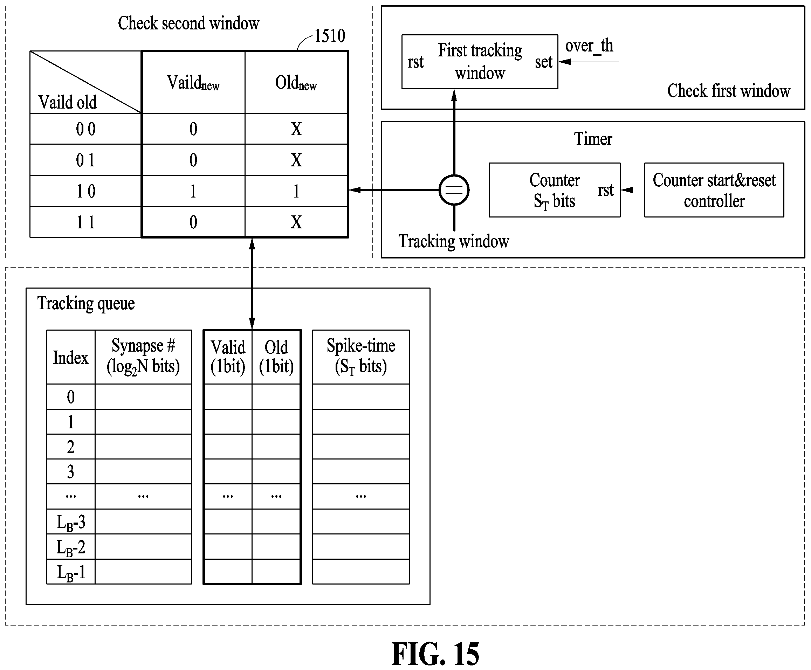

FIG. 15 is a block diagram illustrating an operation performed when a second tracking window limit is reached, according to an example embodiment.

Referring to FIG. 15, when an interval between occurrence times of two adjacent post-spikes is greater than a second tracking window, valid and old bits corresponding to a pre-spike received between the occurrence times of the two post-spikes may be updated according to predetermined rules. The predetermined rules are shown in a table 1510. For example, when a counter value reaches a value set by the second tracking window, [Valid, Old], which is [1, 0], may be updated to [1, 1], and in other cases, [Valid, Old] may be updated to [0, X]. In this example, X may indicate that an existing bit value is maintained as is. The valid and old bits are described with reference to FIGS. 16 and 17.

FIG. 16 is a diagram illustrating an operation in which a tracking queue is updated when a pre-spike is received and a post-spike occurs, according to an example embodiment.

When a post-spike fires in a neuron module, pre-then-post learning on previously received pre-spikes may be performed by using a register array of the size equivalent to the number of pre-spikes to be tracked. That is, the pre-then-post learning may be performed on pre-spikes of the size corresponding to that of the register array when a post-spike fires, using a register array for storing a reception time of a pre-spike and a single subtractor for calculating a pre-then-post time.

For a pre-then-post update to be performed when a post-spike occurs, the register array that stores a reception point of a pre-spike may also be referred to as a pre-then-post tracking queue or a tracking queue. For example, when a pre-spike is received, identification information of a synapse receiving the pre-spike (e.g., direction information of the synapse), time information of a timer about when the pre-spike is received, and valid and old bit information of the pre-spike may be stored in a first index of the tracking queue. At a substantially similar time and/or the same time, previously stored information may be pushed to a subsequent index of each index. In this way, the learning device may measure a pre-then-post time for a most recent pre-spike received closest to an occurrence time of a post-spike, as many as the number of indices in the tracking queue.

The valid bit may indicate whether the pre-spike is valid for a pre-then-post weight update, and the old bit may be used to determine whether the pre-spike has passed a maximum value of the timer once. That is, when a post-spike fires, after information about pre-spikes stored in the tracking queue is scanned, the pre-then-post weight update may be performed only on a pre-spike whose valid bit is one (1) and/or "high".

In the example shown in FIG. 16, a, b, c, and d may respectively represent time information (e.g., counter values) of a timer when pre-spikes are received. For example, when a pre-spike is first received at a k-th synapse, [k, 1, 0, a] may be stored in a tracking queue. Subsequently, when a pre-spike is received at an m-th synapse, the [k, 1, 0, a] previously stored in the tracking queue may be pushed to a second index, and [m, 1, 0, b] may be stored at a first index. Similarly, the tracking queue may be updated each time a pre-spike is received. For example, as shown, a tracking queue 1610 may represent a state at a time d, and both valid and old bits at this time may be [1, 0]. Subsequently, when a new post-spike occurs, a pre-then-post weight update may be performed only for a pre-spike whose valid bit is one (1) and/or "high", after which the valid bit may all be changed from one (1) and/or "high" to zero (0) and/or "low", and may then be reflected in a tracking queue 1620. Thus, the pre-then-post weight update may be performed only once for each pre-spike.

FIG. 17 is a diagram illustrating an operation in which a tracking queue is updated when a second tracking window limit is reached, according to an example embodiment.

In the example of FIG. 17, a TW limit may indicate a limit of a second tracking window. For the convenience of description, it may be assumed that a second post-spike occurs after a first post-spike occurs, and the limit of the second tracking window is passed twice.

For example, when a pre-then-post weight update is performed on a pre-spike whose old bit is zero (0) and/or "low", the learning device may determine the pre-spike to be a pre-spike received at the same timer stage (e.g., tracking window) as a post-spike, and a pre-then-post time may be calculated as tₒᵤₜ - tᵢₙ. In this case, the same timer stage may represent an interval from a reset time of a timer to a time at which a maximum value is reached, when the timer is reset and then restarted by an occurrence of a post-spike and reaches the maximum value (e.g., a tracking window limit). In addition, tₒᵤₜ may indicate an occurrence time of a post-spike, and tᵢₙ may indicate a reception time of a pre-spike.

For a pre-spike whose old bit is one (1) and/or "high", the learning device may determine the pre-spike to be a pre-spike received at a timer stage before a current post-spike, and a pre-then-post time may be calculated as T_{MAX} + tₒᵤₜ - tᵢₙ + 1. In the example of FIG. 16, T_{MAX} may be equal to 31 and a tracking window may have a total of 32 cycles. However, the present disclosure is not limited in this regard, and T_{MAX} may be equal to values less than 31 and/or values greater than 31. In an embodiment, if an overflow occurs, a pre-spike outside the second tracking window may be determined and excluded from a weight update. In this case, since the timer is reset immediately after a post-spike fires, a timer value before the timer is reset may be stored in a post-spike time buffer for the use of tₒᵤₜ. A value of the post-spike time buffer may be used to calculate a pre-then-post time.

When a pre-spike is received, [Valid, Old] bits of the pre-spike may be set to [1, 0] and stored in the tracking queue, and when a post-spike fires, all valid bits in the tracking queue may be reset to zero (0) and/or "low".

In the example of FIG. 17, when the timer reaches its maximum value, [Valid, Old] bits may be updated according to a predetermined rule. When the [Valid, Old] bits are [1, 0], they may be updated to [1, 1], and in other cases, only the valid bit may be reset to zero (0) and/or "low" while the old bit may be maintained as is.

For example, when a pre-then-post time calculation is performed for a plurality of pre-spikes, after scanning the tracking queue, for a pre-spike with the valid bit of one (1) and/or "high", an operation of subtracting a reception time of the pre-spike from an occurrence time (or firing time) of a post-spike may be performed. For example, when the valid bit of an index stored in the tracking queue is one (1) and/or "high", such a subtraction operation equivalent to the number of indices stored in the tracking queue at a firing time of a post-spike may be performed. In this case, the subtraction operation may be performed multiple times using one subtractor through time division, rather than using multiple subtractors. As described above, by setting a frequency of an operation clock to be higher than that of a spike clock, this subtraction operation may be performed quickly. This may minimize the hardware cost for all digital circuit processing, in addition to the pre-then-post time calculation.

In the example of FIG. 17, when a first TW limit is reached, all [Valid, Old] bits in the tracking queue may be [1, 0], and may all be updated to [1, 1]. Subsequently, for pre-spikes received at times e and f, all [Valid, Old] bits may all be stored as [1, 0]. Subsequently, when a second TW limit is reached, [Valid, Old] bits of [1, 1] may all be updated to [0, 1], and [Valid, Old] bits of [1, 0] may all be updated to [1, 1]. Subsequently, when a post-spike occurs, a pre-spike for which a pre-then-post weight update is to be performed may be selected based on the [Valid, Old] bit. All pre-spikes whose the valid bit is zero (0) and/or "low" may be excluded from the weight update, and based on whether the [Valid, Old] bits are [1, 1] or [1, 0], a pre-then-pose time may be calculated according to the calculation method described above. Furthermore, in the case of a pre-spike whose [Valid, Old] bits are [1, 1], the reception times f and e of the pre-spikes may be compared to an occurrence time g of the post-spike, and the pre-then-post weight update may be performed only for a pre-spike whose size of the reception time f or e is greater than the occurrence time g of the post-spike. Thus, the pre-then-post weight update may be performed only for pre-spikes whose interval between a pre-spike and a post-spike is smaller than the size of the second tracking window.

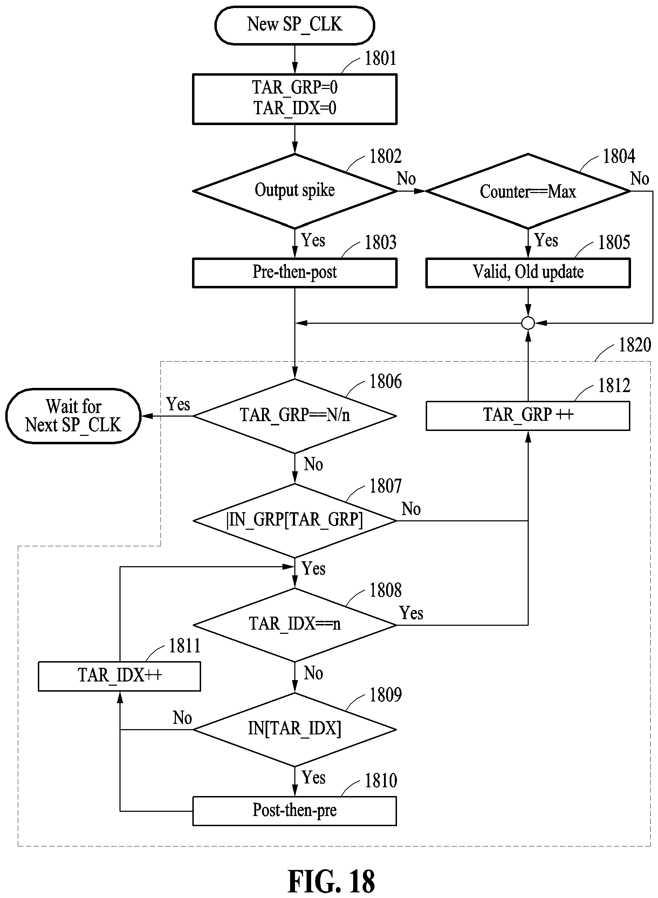

FIG. 18 is a flowchart illustrating an STDP learning operation, according to an example embodiment.

Referring to FIG. 18, the operations illustrated may correspond to operations 1120 and 1130 described above with reference to FIG. 11.

In operation 1801, TAR_GRP and TAR_IDX may each be initialized to zero (0) and/or "low". For example, both variables may be initialized to zero (0) and/or "low" on a rising edge of a spike clock.

TAR_GRP and TAR_IDX may be and/or may include registers that may be needed to determine whether a pre-spike has been received while searching synapse directions one by one. For example, in a case of searching synapses (e.g., 256) by dividing the synapses into groups of synapses (e.g., 32 groups of eight (8) synapses each), TAR_GRP may be a 6-bit variable to scan groups from 0 to 31, and TAR_IDX may be a 4-bit variable to search synapses in one group including 0 to 7.

In such an example, TAR_GRP may need to express values of up to 32, and thus may be set to 6 bits instead of 5 bits. If TAR_GRP is set to 5 bits, a real value of TAR_GRP may only express up to a value of 31 (e.g., 1_1111₂ in binary). In this case, if one (1) is added to the value expressed in 5 bits, the resulting value may be expressed as 0 (e.g., 0_0000₂) rather than 32 (e.g., 10_0000₂). In an embodiment, a real index of the 32nd group may be expressed as 1_1111₂. In such an embodiment, if one (1) is added to the 5-bit TAR_GRP after the search is completed with the 32nd group, TAR_GRP may become 0_0000₂, which may express a state in which the search of the 1st group is in progress. Therefore, after completing the search with the 32nd group, one (1) may be added to TAR_GRP such that TAR_GRP may become 32 (e.g., 10_0000₂), and thus TAR_GRP may be set to 6 bits to indicate that the search is completed with all the groups. That is, TAR_GRP may be set to 6 bits rather than 5 bits such that a TAR_GRP value of 32 (e.g., 10_0000₂) may indicate that the search is completed with all the groups. As another example, 257 synapses may be grouped into 32 groups of 8 each and 6 bits of TAR_GRP may be used. However, if 217 synapses are grouped into 31 groups of 7 each, TAR_IDX may be set to 3 bits (e.g., TAR_IDX = 3-bit), and TAR_GRP may be set to 5 bits (e.g., TAR_GRP = 5 -bit) without using a further 1 bit. That is, the number of bits of TAR_GRP may be set to the size that may cover the number of groups + 1.

Since TAR_IDX needs to express up to 8 (e.g., the number of synapses + 1), TAR_IDX may be set to 4 bits rather than 3 bits. That is, in order to express eight (8) (e.g., 1000₂) for TAR_IDX indicating that the search is completed with all the eight (8) synapses in a corresponding group, TAR_IDX may be set to 4 bits rather than 3 bits.

In operation 1802, whether a post-spike requiring a pre-then-post weight update has occurred may be determined.

When the post-spike has occurred (Yes in operation 1802), the pre-then-post weight update may be performed in operation 1803, and then a process of scanning pre-spikes may be performed in subsequent operations 1820.

Conversely, when the post-spike did not occur (No in operation 1802), operation 1804 may be performed subsequently.

In operation 1804, whether a counter is at its maximum value may be determined.

When the counter is the maximum value (Yes in operation 1804), valid and old bits may be updated in operation 1805, and then the process of scanning pre-spikes may be performed in the operations 1820.

When the counter is not the maximum value (No in operation 1804), the process of scanning pre-spikes may then be performed in the operations 1820.

In the operations 1820, the post-then-pre weight update may be performed through the scanning of pre-spikes.

In operation 1806, whether TAR_GRP is N/n may be determined. When TAR_GRP is N/n (Yes in operation 1806), it may indicate that the group search has completed and that TAR_GRP for group search has reached 32 (e.g., N/n = 256/8 = 32). That is, N may denote a total number of synapses (e.g., 256), and n may denote the number of synapses in one group (e.g., 8).

When TAR_GRP is N/n (e.g., in a case of searching all groups for determining whether a pre-spike has been received), "Wait for Next SP_CLK block" may be performed.

When TAR_GRP is not N/n (No in operation 1806) (e.g., in a case in which the searching is not performed on all the groups for determining whether a pre-spike has been received), a bitwise OR operation may be performed on each group in operation 1807 to determine whether there is a pre-spike in a corresponding group.

When a result of the bitwise OR operation is zero (0) and/or "low" due to the absence of a pre-spike in a corresponding group (No in operation 1807), the search may be performed on a subsequent group in operation 1812.

When there is a pre-spike in a corresponding group (Yes in operation 1807), whether a last index within the group has been reached may be determined in operation 1808. That is, whether all synapses (e.g., indices) within the group have been searched may be determined.

When all the indices have not been searched (No in operation 1808), whether there is a pre-spike in each index may be determined in operation 1809. When there is a pre-spike in a corresponding index (Yes in operation 1809), the post-then-pre weight update may be performed in operation 1810. Subsequently, in operation 1811, the search may be performed on a subsequent index.

When the search has been completed with all the indices (Yes in operation 1808), the search may be performed on a subsequent index in operation 1812.

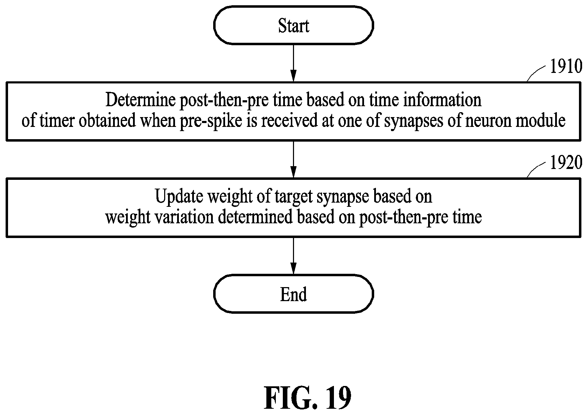

FIG. 19 is a flowchart illustrating a method of operating a learning device of a neuron module, according to an example embodiment.

In operation 1910, a learning device of a neuron module may determine a post-then-pre time based on time information of a timer about a time when a pre-spike is received at any one of a plurality of synapses of the neuron module in an SNN. The learning device of the neuron module may determine the post-then-pre time based on a received pre-spike each time a pre-spike is received at any one of the plurality of synapses. When a pre-spike received at one of the plurality of synapses is received after a preset threshold time, the learning device of the neuron module may not determine the post-then-pre time corresponding to the pre-spike.

In operation 1920, the learning device of the neuron module may update a weight of a synapse receiving the pre-spike based on a weight variation determined based on the post-then-pre time.

The single timer may be reset and restarted when a post-spike occurs in the neuron module. The single timer may count a time without being reset even when a pre-spike is input to any one of the plurality of synapses.

The learning device of the neuron module may determine a pre-then-post time based on a difference between first time information of the timer about a time when a post-spike occurs in the neuron module and second time information of the timer about a time when a pre-spike is received before the post-spike occurs. The learning device of the neuron module may update the weight of the synapse based on the weight variation determined based on the pre-then-post time. When the pre-spike received before the post-spike occurs is received before a preset threshold time, the learning device of the neuron module may not determine the pre-then-post time corresponding to the pre-spike.

When used as a local learning method in a neuromorphic processor with an SNN or a neuron module with scalable features replicated on silicon (Si), the example embodiments described herein may implement STDP learning while potentially reducing hardware resources that may increase by an increase in the number of pre-spikes that are required to be processed by an increase in the number of synapses connected to one neuron, when compared to a related neuron module.

For the operations described above with reference to FIG. 19, reference may be made to what has been described above with reference to FIGS. 1 to 18, and a more detailed description thereof is omitted for the sake of brevity.

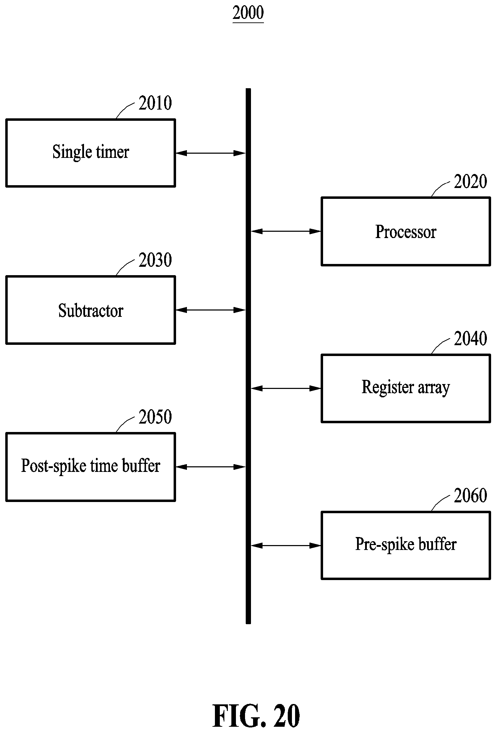

FIG. 20 is a diagram illustrating a learning device of a neuron module, according to an example embodiment.

Referring to FIG. 20, a learning device 2000 of a neuron module may include a single timer 2010 and a processor 2020. The learning device 2000 of the neuron module may further include a subtractor 2030, a register array 2040, a post-spike time buffer 2050, and a pre-spike buffer 2060. The single timer 2010, the subtractor 2030, and the register array 2040 may be implemented as digital circuits, and may be incorporated into the processor 2020. The register array 2040 may be a type of memory used within the processor 2020, and may have fast storage locations accessed faster than other types of memory. The single timer 2010 may be embodied using dedicated timer chips or built-in timers within the processor 2020, and may be programmed to start, stop, and reset based on certain events, such as the detection of a spike. For example, a field programmable gate array (FPGA) may be used to implement custom logic that includes timing functionality.

The single timer 2010 may be reset and restarted when a post-spike occurs in the neuron module within an SNN. The single timer 2010 may count a time without being reset even when a pre-spike is input to any one of a plurality of synapses.

The processor 2020 may determine a post-then-pre time based on time information of the timer 2010 about a time when a pre-spike is received at any one of the plurality of synapses of the neuron module, and determine a weight variation based on the post-then-pre time.

The processor 2020 may determine a post-then-pre time based on a received pre-spike each time a pre-spike is received at any one of the plurality of synapses. When a pre-spike received at one of the plurality of synapses is received after a preset threshold time, the processor 2020 may not determine a post-then-pre time corresponding to the pre-spike. The processor 2020 may determine a pre-then-post time based on a difference between first time information of the timer 2010 about a time when a post-spike occurs and second time information of the timer 2010 about a time when a pre-spike is received in a case in which the pre-spike is received before the post-spike occurs, and may determine a weight variation based on the pre-then-post time. When the pre-spike received before the post-spike occurs is received before a preset threshold time, the processor 2020 may not determine the pre-then-post time corresponding to the pre-spike.

When a difference between an occurrence time of a previous post-spike occurring before a post-spike and an occurrence time of the post-spike is greater than a threshold time, for a pre-spike whose difference between an occurrence time and a reception time of a post-spike is less than a threshold time, the processor 2020 may determine a pre-then-post time based on first time information of the timer 2010 about a time when the post-spike occurs, second time information of the timer 2010 about a time when the pre-spike is received in a case in which the pre-spike is received before the post-spike occurs, and the threshold time, and may determine a weight variation based on the pre-then-post time.

A weight of a synapse receiving the pre-spike may be updated based on the weight variation. A frequency of an operation clock applied to the processor 2020 may be higher than that of a spike clock applied to the single timer 2010.

The subtractor 2030 may calculate the difference between the first time information and the second time information.

When a pre-spike is received in the neuron module, the register array 2040 may store identification information of a synapse receiving the pre-spike, time information of the timer 2010 about a time when the pre-spike is received, and characteristic information about the pre-spike. The register array 2040 may have the size equivalent to the number of pre-spikes from which a pre-then-post time is to be tracked.

The post-spike time buffer 2050 may store an occurrence time of a post-spike.

The pre-spike buffer 2060 may include bits representing whether a pre-spike has been received at a corresponding synapse. The bits may be grouped into two or more groups, and a search operation for searching for a synapse receiving a pre-spike may be selectively performed on a group in which a result of a bitwise operation performed on the grouped bits is a first value.

A post-spike may be generated in response to an accumulated value of pre-spikes received by the neuron module through the plurality of synapses exceeding a threshold and/or may be generated when a signal that forces the accumulated value of pre-spikes to exceed the threshold is applied to the neuron module from the outside of the learning device 2000.

The learning device 2000 of the neuron module may also perform the other operations described with reference to FIGS. 1 to 19.

The example embodiments described herein may be implemented using hardware components, software components and/or combinations thereof. A processing device may be implemented using one or more general-purpose or special purpose computers, such as, for example, a processor, a controller, an arithmetic logic unit (ALU), a digital signal processor, a microcomputer, a field programmable gate array (FPGA), a programmable logic unit (PLU), a microprocessor, or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art may appreciate that a processing device may include multiple processing elements and multiple types of processing elements. For example, a processing device may include multiple processors or a processor and a controller. In addition, different processing configurations may be possible, such as, parallel processors.

The software may include a computer program, a piece of code, an instruction, or some combination thereof, to independently or collectively instruct and/or configure the processing device to operate as desired. The software and/or data may be embodied permanently or temporarily in any type of machine, component, physical or virtual equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described examples may be recorded in non-transitory computer-readable media including program instructions to implement various operations of the above-described examples. The media may also include, alone or in combination with the program instructions, data files, data structures, and the like. The program instructions recorded on the media may be those specially designed and constructed for the purposes of examples, or they may be of the kind well-known and available to those having skill in the computer software arts. Examples of non-transitory computer-readable media include magnetic media such as hard disks, floppy disks, and magnetic tape; optical media such as compact disc read-only memory (CD-ROM) discs, digital versatile discs (DVDs), and/or Blue-ray discs; magneto-optical media such as optical discs; and hardware devices that are specially configured to store and perform program instructions, such as read-only memory (ROM), random access memory (RAM), flash memory (e.g., universal serial bus (USB) flash drives, memory cards, memory sticks, etc.), and the like. Examples of program instructions include both machine code, such as produced by a compiler, and files containing higher-level code that may be executed by the computer using an interpreter.

The above-described hardware devices may be configured to act as one or more software modules in order to perform the operations of the above-described examples, or vice versa.

While the present disclosure includes specific examples, it is to be apparent after an understanding of the present disclosure that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the invention is defined by the enclosed claims.

## Claims

1. A learning device of a neuron module comprising one or more neurons, the learning device comprising:
a timer configured to be reset and restarted, based on a post-spike occurring in the neuron module in a spiking neural network, SNN; and
a processor configured to:
determine a post-then-pre time based on time information of the timer based on a pre-spike being received by at least one synapse of a plurality of synapses of the neuron module;
determine a weight variation based on the post-then-pre time; and
update a weight of the at least one synapse receiving the pre-spike, based on the weight variation.

2. The learning device of claim 1, wherein the timer is further configured to:
count a time without reset that includes occurrence of the pre-spike being received by the at least one synapse of the plurality of synapses.

3. The learning device of claim 1 or 2, wherein the processor is further configured to:
determine the post-then-pre time, based on the pre-spike, each occurrence of the pre-spike being received by the at least one synapse of the plurality of synapses, or
based on the pre-spike received by the at least one synapse of the plurality of synapses being received after a preset threshold time, prevent a determination of the post-then-pre time corresponding to the pre-spike.

4. The learning device of one of claims 1 to 3, wherein the processor is further configured to:
determine a pre-then-post time based on a difference between first time information of the timer based on the post-spike occurring and second time information of the timer based on the pre-spike being received before the post-spike occurs; and
determine the weight variation based on the pre-then-post time.

5. The learning device of claim 4, further comprising:
a subtractor configured to calculate the difference between the first time information and the second time information, or
wherein the processor is further configured to:
based on the pre-spike received before the post-spike occurs being received before a preset threshold time, prevent a determination of the pre-then-post time corresponding to the pre-spike.

6. The learning device of one of claims 1 to 5, wherein the processor is further configured to:
based on a first difference between a first occurrence time of a previous post-spike occurring before the post-spike and a second occurrence time of the post-spike being greater than a threshold time,
for a pre-spike of which a second difference between the second occurrence time and a reception time of the post-spike is less than the threshold time,
determine a pre-then-post time based on first time information of the timer based on the post-spike occurring, second time information of the timer based on the pre-spike being received before the post-spike occurs, and the threshold time; and
determine the weight variation based on the pre-then-post time.

7. The learning device of one of claims 1 to 6, further comprising:
an operation clock, having a first frequency, applied to the processor;
a spike clock, having a second frequency, applied to the timer,
wherein the first frequency is higher than the second frequency.

8. The learning device of one of claims 1 to 7, further comprising:
a pre-spike buffer comprising bits representing whether the pre-spike is received at a corresponding synapse of the plurality of synapses,
wherein the bits are grouped into a plurality of bit groups, and
wherein the processor is further configured to perform a search operation of searching for a synapse of the plurality of synapses at which the pre-spike is received by selectively performing the search operation on a bit group of the plurality of bit groups having a first value obtained as a result of a bitwise OR operation performed on the plurality of bit groups.

9. The learning device of one of claims 1 to 8, further comprising:
a post-spike time buffer configured to store an occurrence time of the post-spike; and
a register array configured to, based on the pre-spike being received in the neuron module, store identification information of a synapse receiving the pre-spike, the time information of the timer based on the pre-spike being received, and characteristic information about the pre-spike,
wherein the register array is further configured to have a size equivalent to a number of pre-spikes for which a pre-then-post time is to be tracked.

10. The learning device of one of claims 1 to 9, wherein the processor is further configured to:
determine that the post-spike occurs based on at least one of an accumulated value of pre-spikes received by the neuron module through the plurality of synapses exceeding a threshold or based on a signal forcing the accumulated value of pre-spikes to exceed the threshold being applied to the neuron module from outside the learning device.

11. A method of operating a learning device of a neuron module comprising one or more neurons, the method comprising:
determining a post-then-pre time based on time information of a timer obtained based on a pre-spike being received by at least one synapse of a plurality of synapses of the neuron module in a spiking neural network, SNN; and
updating a weight of the at least one synapse receiving the pre-spike based on a weight variation determined based on the post-then-pre time,
wherein the method further comprises resetting and restarting the timer based on a post-spike occurring in the neuron module.

12. The method of claim 11, further comprising:
counting a time without reset that includes occurrence of the pre-spike being received by the at least one synapse of the plurality of synapses.

13. The method of claim 11 or 12, wherein the determining of the post-then-pre time comprises:
determining the post-then-pre time, based on the pre-spike, each occurrence of the pre-spike being received by the at least one synapse of the plurality of synapses, or
based on the pre-spike received by the at least one synapse of the plurality of synapses being received after a preset threshold time, preventing the determining of the post-then-pre time corresponding to the pre-spike.

14. The method of one of claims 11 to 13, further comprising:
determining a pre-then-post time based on a difference between first time information of the timer based on the post-spike occurring in the neuron module and second time information of the timer based on the pre-spike being received before the post-spike occurs,
wherein the updating of the weight comprises updating the weight of the at least one synapse based on the weight variation determined based on the pre-then-post time,
wherein the determining of the pre-then-post time comprises, based on the pre-spike received before the post-spike occurs being received before a preset threshold time, preventing the determining of the pre-then-post time corresponding to the pre-spike.

15. A non-transitory computer-readable storage medium storing computer-executable instructions for operating a learning device of a neuron module comprising one or more neurons, that, when executed by a processor of the learning device, cause the neuron module to:
determine a post-then-pre time based on time information of a timer obtained based on a pre-spike being received by at least one synapse of a plurality of synapses of the neuron module in a spiking neural network, SNN; and
update a weight of the at least one synapse receiving the pre-spike based on a weight variation determined based on the post-then-pre time,
wherein the computer-executable instructions further cause the learning device to reset and restart the timer based on a post-spike occurring in the neuron module.
